# EUROPEAN PATENT APPLICATION

(11) **EP 4 835 980 A1**
(43) Date of publication of application: **04.11.2026**
(21) Application number: 25855538.2
(22) Date of filing: 19.02.2025
(51) Int. Cl.: H01M 4/131, H01M 4/133, H01M 4/134, H01M 10/0525

(54) **BATTERY CELL, BATTERY DEVICE, AND ELECTRIC DEVICE**

(30) Priority: 22.08.2024 CN 202411161595
(71) Applicant: Contemporary Amperex Technology Co., Limited, Ningde, Fujian 352100 (CN)
(72) Inventor: LIU, Huanji, Ningde, Fujian 352100 (CN); SUN, Xin, Ningde, Fujian 352100 (CN); HE, Yong, Ningde, Fujian 352100 (CN); JING, Erdong, Ningde, Fujian 352100 (CN); CHEN, Xiao, Ningde, Fujian 352100 (CN); SHI, Wei, Ningde, Fujian 352100 (CN)
(74) Representative: Aera A/S
(86) International application number: PCT/CN2025/078057
(87) International publication number: WO 2026/040358

(57) **Abstract**

The present application discloses a battery cell (1), a battery device, and an electric device. The battery cell comprises a positive electrode sheet and a negative electrode sheet; in the positive electrode sheet, a positive electrode active material layer comprises a positive electrode active material, the positive electrode active material comprises a nickel cobalt manganese metal oxide, and on the basis of the total molar mass of nickel, cobalt and manganese in the nickel cobalt manganese metal oxide, the molar proportion of nickel in the nickel cobalt manganese metal oxide is 80%-96%; or the positive electrode active material comprises a nickel cobalt aluminum metal oxide, and on the basis of the total molar mass of nickel, cobalt and aluminum in the nickel cobalt aluminum metal oxide, the molar proportion of nickel in the nickel cobalt aluminum metal oxide is 80%-96%; in the negative electrode sheet, a negative electrode active material layer comprises a negative electrode active material, and the negative electrode active material comprises graphite and a silicon-containing material; and on the basis of the total mass of the negative electrode active material, the mass proportion of silicon in the negative electrode active material is 0.1%-10%, and the thickness of a negative electrode current collector is 3%-8% of the total thickness of the negative electrode sheet. Therefore, a battery can have both a higher energy density and a longer service life.

## Description

### PRIORITY INFORMATION

The present application claims priority to and the benefit of Patent Application No. 202411161595.9 filed with the China National Intellectual Property Administration on August 22, 2024, the entire contents of which are incorporated herein by reference.

### TECHNICAL FIELD

The present application belongs to the technical field of batteries, and in particular, to a battery cell, a battery device, and an electric device.

### BACKGROUND

Secondary batteries are used not only in energy storage power systems such as hydropower, thermal power, wind power, and solar power plants, but also in electric tools such as electric bicycles, electric motorcycles, and electric vehicles, as well as military equipment, aerospace, and many other fields. With the development of the current society, the demand for the battery is increasingly high, for example, a high energy density or a long service life, and the like.

### SUMMARY

The present application provides a battery cell, to obtain a high energy density and a long service life.

To achieve the above objective, a first aspect of the present application provides a battery cell, including a positive electrode sheet and a negative electrode sheet:
the positive electrode sheet includes a positive electrode current collector and a positive electrode active substance layer provided on at least one side of the positive electrode current collector, the positive electrode active substance layer includes a positive electrode active material, the negative electrode sheet includes a negative electrode current collector and a negative electrode active substance layer provided on at least one side of the negative electrode current collector, and the negative electrode active substance layer includes a negative electrode active material, where
the positive electrode active material comprises a nickel cobalt manganese metal oxide, and on the basis of the total molar mass of nickel, cobalt and manganese elements in the nickel cobalt manganese metal oxide, the molar proportion of the nickel element in the nickel cobalt manganese metal oxide is 80% to 96%; or
the positive electrode active material includes a nickel cobalt aluminum metal oxide, and on the basis of the total molar mass of nickel, cobalt and aluminum in the nickel cobalt aluminum metal oxide, the molar proportion of the nickel element in the nickel cobalt aluminum metal oxide is 80% to 96%; and
the negative electrode active material includes graphite and a silicon-containing material, on the basis of the total mass of the negative electrode active material, the mass proportion of a silicon element in the negative electrode active material is 0.1% to 10%, and the thickness of the negative electrode current collector is 3% to 8% of the total thickness of the negative electrode sheet.

The battery cell according to the first aspect of the present application at least has the following beneficial effects: By comprehensively controlling the nickel content in the high-nickel positive electrode active material system and the amount of the silicon-containing material in the negative electrode sheet to meet the given ranges, respectively, and adjusting the thickness ratio of the current collector in the negative electrode sheet within the given range, the energy density of the battery can be improved, and the risk of damage or disconnection of the electrode sheet due to repeated expansion of the battery cell during long-term cycling can be reduced. Therefore, a battery can have both a high energy density and a long cycle life.

In some embodiments of the present application, on the basis of the total mass of the negative electrode active material, the mass proportion of the silicon element in the negative electrode active material is 0.5% to 9.5%, optionally 2% to 9.5%. Therefore, it is beneficial to taking into account both higher initial efficiency and better cycle stability on the basis of improving the energy density of the battery.

In some embodiments of the present application, a thickness of the negative electrode current collector is 4% to 7% of a total thickness of the negative electrode sheet. Therefore, the cycle performance and energy density of the battery can be further balanced, and the service life of the battery can be prolonged.

In some embodiments of the present application, a thickness of the positive electrode current collector is 7.5% to 15% of a total thickness of the positive electrode sheet, optionally 10% to 13.5%. Therefore, the cycle performance and energy density of the battery can be further balanced, and the service life of the battery can be prolonged.

In some embodiments of the present application, the positive electrode active material includes the nickel cobalt manganese metal oxide, and on the basis of a total molar mass of nickel, cobalt, and manganese elements in the nickel cobalt manganese metal oxide, a molar proportion of the nickel element in the nickel cobalt manganese metal oxide is 83% to 91%; or the positive electrode active material includes the nickel cobalt aluminum metal oxide, and on the basis of the total molar mass of nickel, cobalt, and aluminum in the nickel cobalt aluminum metal oxide, a molar proportion of the nickel element in the nickel cobalt aluminum metal oxide is 83% to 91%. Therefore, it is beneficial to further improving the cycle performance of the battery and prolonging the service life of the battery on the basis of increasing the energy density of the battery.

In some embodiments of the present application, the silicon-containing material includes a silicon oxide material and/or a silicon-carbon material.

In some embodiments of the present application, on the basis of the total mass of the negative electrode active material, the mass proportion of the silicon element in the negative electrode active material is 2% to 6%, optionally 3% to 5%. Therefore, it is beneficial to taking into account the higher first efficiency and cycle stability on the basis of improving the energy density of the battery.

In some embodiments of the present application, the silicon-containing material further includes metal elements, and the metal elements include one or more elements of Na, Li, Ti, Fe, and Co. Therefore, it is beneficial to further improving the energy density and electrochemical performance of the battery cell.

In some embodiments of the present application, a mass of the metal element is 0.1% to 0.6% of a mass of the silicon element. Therefore, it is beneficial to further improving the energy density and electrochemical performance of the battery cell.

In some embodiments of the present application, at least a part of a surface of the silicon-containing material includes a carbon coating layer. Therefore, it is not only beneficial to improving the structural stability of the silicon-containing material during charge and discharge cycles, but also beneficial to improving the electrical conductivity of the silicon-containing material.

In some embodiments of the present application, the graphite includes natural graphite. Therefore, it is beneficial to further improving the energy density of the battery cell.

In some embodiments of the present application, the positive electrode active material includes a polycrystalline material.

In some embodiments of the present application, a particle size distribution diagram of the positive electrode active material represents a bimodal distribution, particle diameters corresponding to peak values of two peaks are respectively D₁ and D₂, 0.5µm≤D₁≤1.5µm and 7µm≤D₂≤12µm. Therefore, it is beneficial to further increasing the energy density of the battery cell.

In some embodiments of the present application, the positive electrode active material further includes: a pre-lithiation additive. Therefore, the energy density of the battery can be improved, and the battery can have both higher initial Coulombic efficiency and cycle performance.

In some embodiments of the present application, the pre-lithiation additive includes LiₓM_{y}O_{z}, 1≤x≤5, 1≤y≤3, 1≤z≤8, and M includes one or more elements of Ni, Co, V, Cr, Mn, Fe, Mo, Cu, and Zn.

In some embodiments of the present application, the pre-lithiation additive includes Li₂NiO₂ and/or Li₅FeO₄. Therefore, a better positive electrode lithium supplement effect can be achieved.

In some embodiments of the present application, the pre-lithiation additive includes Liₙ NiOₘ and/or LiₚFeOₚ, where 0≤n≤2, 0<m≤2, 0<p≤5, and 0<p≤4.

In some embodiments of the present application, the pre-lithiation additive includes NiOₘ and/or LiₚFeO_{q}, where 0<m≤2, 0<p≤1, and 0<q≤2.

In some embodiments of the present application, on the basis of the total mass of the positive electrode active material, a mass proportion of the pre-lithiation additive is 0.5% to 5%, optionally 1% to 3%. Therefore, the battery achieves high initial Coulombic efficiency and high energy density, as well as superior cycle performance.

In some embodiments of the present application, the positive electrode active material includes the nickel cobalt manganese metal oxide, and the nickel cobalt manganese metal oxide includes one or more elements of Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F, and optionally includes one or more elements of Al, Zr, B, P, and Ti. Therefore, the electrochemical performance of the positive electrode active material can be further improved.

In some embodiments of the present application, the nickel cobalt manganese metal oxide includes an Al element, and on the basis of the total mass of the positive electrode active material, a mass proportion of the Al element is 0.01% to 0.1%.

In some embodiments of the present application, the nickel cobalt manganese metal oxide includes a Zr element, and on the basis of a total mass of the positive electrode active material, a mass proportion of the Zr element is 0.1% to 0.5%.

In some embodiments of the present application, the nickel cobalt manganese metal oxide includes a B element, and on the basis of a total mass of the positive electrode active material, a mass proportion of the B element is 0.01% to 0.15%.

In some embodiments of the present application, the nickel cobalt manganese metal oxide includes a P element, and on the basis of a total mass of the positive electrode active material, a mass proportion of the P element is 0.05% to 0.2%.

In some embodiments of the present application, a single-side coating areal density of the positive electrode active substance layer is 20 mg/cm² to 30 mg/cm². Therefore, it is beneficial to enabling the battery to have a long cycle life, a high energy density, and good kinetic performance.

In some embodiments of the present application, a compacted density of the positive electrode active substance layer is 3.3 g/cm³ to 3.6 g/cm³. Therefore, it is beneficial to enabling the battery to have a long cycle life, a high energy density, and good kinetic performance.

In some embodiments of the present application, a thickness of the positive electrode current collector is 13 µm to 19 µm, optionally 15 µm to 17 µm. Therefore, not only the risk of fracture of the current collector and the active substance layer can be reduced, but also the energy density of the battery can be ensured, so that the battery has higher energy density, better cycle stability, and longer service life.

In some embodiments of the present application, a single-side coating areal density of the negative electrode active substance layer is 10 mg/cm² to 18 mg/cm², optionally 13 mg/cm² to 15 mg/cm². Therefore, it is beneficial to enabling the battery to have a long cycle life, a high energy density, and good kinetic performance.

In some embodiments of the present application, a compacted density of the negative electrode active substance layer is 1.3 g/cm³ to 1.7 g/cm³, optionally 1.4 g/cm³ to 1.55 g/cm³. Therefore, it is beneficial to enabling the battery to have a long cycle life, a high energy density, and good kinetic performance.

In some embodiments of the present application, a thickness of the negative electrode current collector is 6 µm to 13 µm, optionally 8 µm to 11 µm.

In some embodiments of the present application, the battery cell further includes: an electrolyte solution, where the electrolyte solution includes an organic solvent, and the organic solvent includes a cyclic carbonate and a linear carbonate. Therefore, it is further beneficial to obtaining a battery having a high energy density.

In some embodiments of the present application, the cyclic carbonate includes EC and/or PC, and the linear carbonate includes one or more of EMC, DMC, and DEC.

In some embodiments of the present application, on the basis of a total mass of the electrolyte solution, a mass proportion of the cyclic carbonate is 15% to 25%, and a mass proportion of the linear carbonate is 50% to 70%.

In some embodiments of the present application, the electrolyte solution further includes: an additive, including FEC and/or VC. Therefore, it is beneficial to further improving the initial Coulombic efficiency, the energy density and the cycle performance of the battery cell.

In some embodiments of the present application, the battery cell further includes: a separator, where a ceramic coating layer containing an inorganic oxide is provided on a side of the separator facing the positive electrode sheet. Therefore, it is beneficial to improving the oxidation resistance and high-temperature stability of the separator.

In some embodiments of the present application, the separator is further provided with a first bonding coating, and the first bonding coating is located between the separator and the ceramic coating.

In some embodiments of the present application, a second bonding coating layer is provided on a side of the separator facing the negative electrode sheet.

In some embodiments of the present application, a total thickness of the separator is 7 µm to 14 µm, optionally 7 µm to 10 µm.

In some embodiments of the present application, the battery cell is a cylindrical battery, the cylindrical battery includes a housing, the housing includes an upper cover, a lower cover, and a side wall, and a thickness of the side wall is 0.2 mm to 0.4 mm, optionally 0.25 mm to 0.3 mm. Therefore, the side wall of the housing can have a lower thickness and mass, which is beneficial to further improving the energy density of the battery.

In some embodiments of the present application, a thickness of a shell wall of the upper cover or the lower cover is 0.25 mm to 0.45 mm, optionally 0.27 mm to 0.33 mm. Therefore, the upper cover or the lower cover of the housing can have a relatively small thickness and mass, which is beneficial to further improving the energy density of the battery.

A second aspect of the present application provides a battery device, including: the battery cell according to the first aspect, where the battery device includes at least one of a battery module, a battery pack, or an energy storage device.

A third aspect of the present application provides an electric device, including: the battery cell according to the first aspect of the present application or the electric device according to the second aspect of the present application, where the battery cell or the battery device is configured to provide electric energy.

### BRIEF DESCRIPTION OF THE DRAWINGS

The above and/or additional aspects and advantages of the present application will become apparent and more readily appreciated from the following description of the embodiments taken in conjunction with the accompanying drawings, in which:
FIG. 1 is a schematic structural diagram of a battery cell according to an implementation of the present application.
FIG. 2 is a schematic structural diagram of a battery module according to an implementation of the present application.
FIG. 3 is a schematic structural diagram of a battery pack according to an implementation of the present application.
FIG. 4 is an exploded view of FIG. 3.
FIG. 5 is a schematic diagram of an implementation of a battery device of the present application used as an electric device of a power supply.

### Description of reference signs:

1: battery cell; 2: battery module; 3: battery pack; 4: upper case; and 5: lower case.

### DETAILED DESCRIPTION OF PREFERRED EMBODIMENTS

The present application will be further described below with reference to specific embodiments. It should be understood that these specific embodiments are merely illustrative of the application and are not intended to limit the scope of the present application.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

The "range" disclosed in the present application is limited in the form of a lower limit and an upper limit. A given range is limited by selecting a lower limit and an upper limit, which define the boundaries of the specific range. The range defined in this way may include or not include end values and may be combined arbitrarily, that is, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded.

Unless otherwise specified, all implementations and optional implementations of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method includes steps S1 and S2, meaning that the method may include steps S1 and S2 performed sequentially or steps S2 and S1 performed sequentially. For example, the above-mentioned method may further include step S3, meaning that step S3 may be added to the method in any order, e.g. the method may include steps S1, S2, and S3, or steps S1, S3, and S2, or steps S3, S1, and S2, and the like.

Unless otherwise specified, in the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the present application, the terms "a plurality of" and "various" mean two or more.

Unless otherwise defined, all technical and scientific terms used in the present application have the same meaning as commonly understood by those skilled in the art to which the present application belongs. The terms used herein are merely for the purpose of describing specific embodiments and are not intended to limit the present application. The terms "include", "be provided with", and any other variants thereof in the specification and claims of the present application are intended to cover a non-exclusive inclusion. Unless otherwise specified, the terms used in the present application have the meanings commonly understood by those skilled in the art. Unless otherwise specified, the numerical values of each parameter mentioned in the present application may be measured by various measuring methods commonly used in the art, for example, according to the methods given in the embodiments of the present application.

Currently, with the constant advancement of the green and environmental-friendly topic, the application of batteries has been advanced into various aspects of life, including vehicles, electronic devices, energy storage devices, and the like. With the continuous expansion of application of the battery, the battery is required for higher and higher reliability. For example, taking lithium-ion batteries as an example, secondary batteries with high energy density and long service life have become an important research direction in the battery industry. In the existing battery system, there are many improvement directions for improving the energy density and prolonging the service life of the battery, including but not limited to the selection of positive and negative electrode active materials, the improvement of battery structure, the optimization of the electrolyte solution, and the like, for example, there is a solution of using a high-nickel positive electrode active material in combination with a graphite negative electrode to prolong the service life of the battery from the two aspects of battery energy density and cycle stability, but this solution has limited ability to improve the energy density of the battery.

The present application aims to develop a battery cell with both high energy density and long service life, and the energy density of the battery cell is improved by using a high-nickel positive electrode active material in combination with graphite and a silicon-containing material negative electrode; and at the same time, by controlling the nickel content in the positive electrode active material, the doping amount of the silicon-containing material in the negative electrode sheet, and the thickness ratio of the current collector in the negative electrode sheet, the cycle performance of the battery cell is considered. On the basis of obtaining a high energy density, the cycle life of the battery cell is prolonged, and the service life of the battery cell is prolonged.

In the positive electrode sheet of the present application, the positive electrode active material includes a nickel cobalt manganese metal oxide, and on the basis of the total molar mass of nickel, cobalt and manganese elements in the nickel cobalt manganese metal oxide, the molar proportion of the nickel element in the nickel cobalt manganese metal oxide is 80% to 96%, or the positive electrode active material includes a nickel cobalt aluminum metal oxide, and on the basis of the total molar mass of nickel, cobalt and aluminum in the nickel cobalt aluminum metal oxide, the molar proportion of the nickel element in the nickel cobalt aluminum metal oxide is 80% to 96%; and in the negative electrode sheet, the negative electrode active material includes graphite and a silicon-containing material, on the basis of the total mass of the negative electrode active material, the mass proportion of a silicon element in the negative electrode active material is 0.1% to 10%, and the thickness of a negative electrode current collector is 3% to 8% of the total thickness of the negative electrode sheet. The positive electrode sheet uses a high-nickel ternary active material, and the negative electrode sheet uses graphite and the silicon-containing material, which can make full use of the high gram capacity of the positive and negative electrode materials to improve the capacity of the positive and negative electrode sheets, and significantly improve the energy density of the battery. However, the silicon-containing material is easy to cause particle cracking and pulverization due to large volume expansion during the charge-discharge cycle, which in turn causes rapid attenuation of the battery capacity, so although appropriately increasing the amount of the silicon-containing material in the negative electrode sheet has a positive effect on the improvement of the energy density of the battery, the cycle performance of the battery will be reduced with the increase of the amount of the silicon-containing material, especially when the positive electrode active material is a high-nickel material, the cycle capacity attenuation of the battery is more serious, so the amount of the silicon-containing material in the negative electrode sheet needs to be controlled within an appropriate range. However, although an appropriate amount of silicon-containing material in the negative electrode sheet can improve the energy density and reduce the cycle fading, the easy expansion of the silicon-containing material in the negative electrode sheet also causes the negative electrode active substance layer to expand repeatedly during the long-term cycle, so that the negative electrode current collector connected thereto is also pulled by repeated stress, so if the negative electrode current collector in the negative electrode sheet is set to be too thin (low tensile strength), it is easy to cause the negative electrode current collector to break or crack the negative electrode active substance layer due to the low tensile strength, which reduces the cycle life and reliability of the battery, and if the current collector is set to be too thick, it is easy to reduce the energy density of the battery and the internal resistance of the battery is also increased. In the present application, by comprehensively controlling the nickel content in the high-nickel positive electrode active material system and the amount of the silicon-containing material in the negative electrode sheet to meet the given ranges, respectively, and adjusting the thickness ratio of the current collector in the negative electrode sheet within the given range, the energy density of the battery can be improved, and the risk of damage or disconnection of the electrode sheet due to repeated expansion during the long-term cycle of the battery cell can be reduced. Therefore, the battery cell can have both a high energy density and a long cycle life.

The battery cell disclosed in the embodiments of the present application may be applied to electric devices powered by a battery cell or a battery device equipped with the battery cell, as well as various energy storage systems that adopt a battery cell or a battery device incorporating the battery cell as an energy storage component. The electric device may comprise, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a battery cell, including: a positive electrode sheet and a negative electrode sheet. The positive electrode sheet includes a positive electrode current collector and a positive electrode active substance layer provided on at least one side of the positive electrode current collector, the positive electrode active substance layer includes a positive electrode active material, the negative electrode sheet includes a negative electrode current collector and a negative electrode active substance layer provided on at least one side of the negative electrode current collector, the negative electrode active substance layer includes a negative electrode active material, where the positive electrode active material includes a nickel cobalt manganese metal oxide, and on the basis of the total molar mass of nickel, cobalt and manganese elements in the nickel cobalt manganese metal oxide, the molar proportion of the nickel element in the nickel cobalt manganese metal oxide is 80% to 96%, or, the positive electrode active material includes a nickel cobalt aluminum metal oxide, and on the basis of the total molar mass of nickel, cobalt and aluminum elements in the nickel cobalt aluminum metal oxide, the molar proportion of the nickel element in the nickel cobalt aluminum metal oxide is 80% to 96%; and the negative electrode active material includes graphite and a silicon-containing material, on the basis of the total mass of the negative electrode active material, the mass proportion of a silicon element in the negative electrode active material is 0.1% to 10%, and a thickness of the negative electrode current collector is 3% to 8% of the total thickness of the negative electrode sheet.

In the battery cell of the present application, the positive electrode sheet uses a high-nickel multi-element active material, and the negative electrode sheet uses graphite and the silicon-containing material, so that a high-gram capacity characteristic of positive and negative electrode materials can be fully used to improve capacities of the positive and negative electrode sheets, thereby significantly improving the energy density of the battery. However, the silicon-containing material is easy to cause particle cracking and pulverization due to large volume expansion during the charge-discharge cycle, which in turn causes rapid attenuation of the battery capacity, so although appropriately increasing the amount of the silicon-containing material in the negative electrode sheet has a positive effect on the improvement of the energy density of the battery, the cycle performance of the battery will be reduced with the increase of the amount of the silicon-containing material, especially when the positive electrode active material is a high-nickel material, the cycle capacity attenuation of the battery is more serious, so the amount of the silicon-containing material in the negative electrode sheet needs to be controlled within an appropriate range. However, although an appropriate amount of silicon-containing material in the negative electrode sheet can improve the energy density and reduce the cycle fading, the easy expansion of the silicon-containing material in the negative electrode sheet also causes the negative electrode active substance layer to expand repeatedly during the long-term cycle, so that the negative electrode current collector connected thereto is also pulled by repeated stress, so if the negative electrode current collector in the negative electrode sheet is set to be too thin (low tensile strength), it is easy to cause the negative electrode current collector to break or crack the negative electrode active substance layer due to the low tensile strength, which reduces the cycle life and reliability of the battery, and if the current collector is set to be too thick, it is easy to reduce the energy density of the battery and the internal resistance of the battery is also increased.

Such a problem is particularly prominent in a cylindrical battery. Taking the cylindrical battery as an example, during a long-term cycle of the cylindrical battery, an outer ring of the electrode sheet, especially an outermost ring of the electrode sheet, is subjected to a large force, and the negative electrode active substance layer is more likely to be damaged or disconnected due to an unreasonable ratio of the thickness of the current collector to the thickness of the electrode sheet, which has a more significant impact on the cycle performance.

In the present application, by comprehensively controlling the nickel content in the high-nickel positive electrode active material system and the amount of the silicon-containing material in the negative electrode sheet to satisfy the given ranges, respectively, and adjusting the thickness ratio of the current collector in the negative electrode sheet within the given range, the energy density of the battery can be improved, and the risk of electrode sheet breakage or disconnection caused by repeated expansion during the long-term cycle of the battery cell can be reduced. Taking a cylindrical battery as an example, the risk of breakage or disconnection of an outer ring electrode sheet can be reduced, so that the energy density, the cycle life and the reliability of the battery cell are improved.

Therefore, the battery cell according to the first aspect of the present application at least has the following beneficial effects: the battery can have both a high energy density and a long cycle life.

Exemplarily, the positive electrode active material may include a nickel cobalt manganese metal oxide, and on the basis of the total molar mass of nickel, cobalt and manganese elements in the nickel cobalt manganese metal oxide, a molar proportion of the nickel element in the nickel cobalt manganese metal oxide may be 80%, 82%, 85%, 88%, 90%, 92%, 95% or 96%, or the like.

Exemplarily, the positive electrode active material may include a nickel cobalt aluminum metal oxide, and on the basis of the total molar mass of nickel, cobalt and aluminum in the nickel cobalt aluminum metal oxide, a molar proportion of the nickel element in the nickel cobalt aluminum metal oxide may be 80%, 82%, 85%, 88%, 90%, 92%, 95% or 96%, or the like.

Exemplarily, on the basis of the total mass of the negative electrode active material, the mass proportion of the silicon element in the negative electrode active material may be 0.1%, 0.3%, 0.5%, 0.8%, 1%, 2%, 3%, 4%, 5%, 6%, 7%, 8%, 9% or 10%, or the like.

Exemplarily, the thickness of the negative electrode current collector may be 3%, 4%, 5%, 6%, 7% or 8%, or the like of the total thickness of the negative electrode sheet.

In the present application, the analysis method of the relative molar proportion of the nickel element in the positive electrode active material and the mass proportion of the silicon element in the negative electrode active material may include, but is not limited to, inductively coupled plasma emission spectroscopy (ICP) test or EDS energy spectrum analysis, for example, referring to EPA6010D-2014 "Inductively Coupled Plasma Atomic Emission Spectroscopy", after the battery is disassembled, the sample to be tested of the active material is separated from the electrode sheet, and after the sample to be tested is treated by a chemical method and digested into a solution, it is atomized into plasma and excited to emit characteristic spectral lines of elements, and the element content is qualitatively and quantitatively analyzed according to the wavelength and intensity (proportional to the concentration) of the spectral lines. In addition, the thickness proportion of the current collector in the negative electrode sheet can be calculated by the total thickness of the test electrode sheet and the thickness of the current collector in combination with conventional instruments such as a thickness meter. In an actual operation process, when the element composition in the active material is tested, an operation such as a mechanical stripping method may be used to obtain a sample to be tested of the active material from the electrode sheet, and when the thickness of the current collector is tested, one or more of a heat treatment method, a mechanical stripping method, and a chemical dissolution method may be combined to effectively separate the active material layer of the electrode sheet from the current collector.

### [Positive electrode sheet]

In some embodiments of the present application, the thickness of the positive electrode current collector may be 7.5% to 15% of the total thickness of the positive electrode sheet. Exemplarily, the thickness of the positive electrode current collector may be 7.5%, 8%, 9%, 10%, 11%, 12%, 13%, 14% or 15% or the like of the total thickness of the positive electrode sheet. A high-nickel material exhibits a greater degree of expansion during cycling compared with a low-nickel material. This characteristic of the high-nickel material also causes the positive electrode active substance layer to be repeatedly stretched due to cyclic expansion and contraction during long-term cycling. Therefore, if the thickness ratio of the positive electrode current collector in the positive electrode sheet is set to be thin (low tensile strength), due to the pulling of the negative electrode active substance layer, it is easy to cause the risk of damage or cracking of the positive electrode active substance layer due to the low tensile strength of the positive electrode current collector, and it is easy to reduce the cycle life and reliability of the battery. By controlling the thickness ratio of the positive electrode current collector in the positive electrode sheet to satisfy the given range, not only the cycle performance and reliability of the battery cell can be further improved, but also the energy density of the battery cell can be ensured, and the adverse effects on the energy density and internal resistance of the battery due to the increase in the thickness of the positive electrode current collector can be reduced, so that the battery can have higher energy density, better cycle stability and longer service life. Optionally, the thickness of the positive electrode current collector may be 10% to 13.5% of the total thickness of the positive electrode sheet.

In some embodiments of the present application, the positive electrode active material may include a nickel cobalt manganese metal oxide, and on the basis of the total molar mass of nickel, cobalt and manganese elements in the nickel cobalt manganese metal oxide, the molar proportion of the nickel element in the nickel cobalt manganese metal oxide may be 83% to 91%; or, the positive electrode active material may include a nickel cobalt aluminum metal oxide, and on the basis of the total molar mass of nickel, cobalt and aluminum in the nickel cobalt aluminum metal oxide, a molar proportion of the nickel element in the nickel cobalt aluminum metal oxide may be 83% to 91%. For a positive electrode active material with a high nickel content in a nickel cobalt manganese system and/or nickel cobalt aluminum system, the relative molar content of nickel is controlled to satisfy the given range, which can further consider the cycle stability of the battery while improving the energy density of the battery, reduce the risk of problems such as structural instability of the positive electrode active material or lithium-nickel mixing due to the high nickel content, and prolong the service life of the battery.

In some embodiments of the present application, the positive electrode active material may include a polycrystalline material. Optionally, the polycrystalline material may include secondary particles formed by stacking primary particles. In some implementations, the positive electrode active material may be a polycrystalline material. In some other implementations, the positive electrode active material may include a polycrystalline material and a monocrystalline material. Compared with the polycrystalline material, the particle diameter of the monocrystalline material is relatively small, and the monocrystalline material can be filled in the pores of the polycrystalline material, thereby improving the compacted density of the positive electrode active substance layer; and in addition, the crystal structure of the monocrystalline particles is more stable, the voltage is higher, and the cycle life is longer, and the mixing of the monocrystalline material and the polycrystalline material is beneficial to further improving the energy density and cycle performance of the battery and prolonging the service life.

In some embodiments of the present application, the particle size distribution diagram of the positive electrode active material may present a bimodal distribution, and the particle diameters corresponding to the peak values of the two peaks may be D₁ and D₂, respectively, 0.5µm≤D₁≤1.5µm and 7µm≤D₂≤12µm. For example, a value of D₁ may be 0.5 µm, 0.8 µm, 1 µm, 1.2 µm or 1.5 µm, or the like, and a value of D₂ may be 7 µm, 8 µm, 9 µm, 10 µm, 11 µm or 12 µm, or the like. The particle size distribution diagram of the positive electrode active material may be measured, counted and obtained by a laser particle size analyzer (Malvern Mastersizer 2000) with reference to the standard GB/T 19077-2016/ISO 13320:2009. Making the particle size distribution diagram of the positive electrode active material present a bimodal distribution can be achieved by using two positive electrode active materials with different particle size distributions in combination, and then the pores of the positive electrode active material with large particles can be filled with the positive electrode active material particles with small particle diameter to achieve a higher electrode sheet compacted density. In the embodiments of the present application, by controlling the particle size distribution diagram of the positive electrode active material to present a bimodal distribution and satisfying the given range, the compacted density of the positive electrode sheet active substance layer can be significantly improved, thereby further improving the energy density of the battery.

In some embodiments of the present application, the positive electrode active material may be a polycrystalline material, the particle size distribution diagram of the positive electrode active material may present a bimodal distribution, the particle diameters corresponding to the peak values of the two peaks may be D₁ and D₂, respectively, 0.5µm≤D₁≤1.5µm and 7µm≤D₁≤12µm. Compared with a monocrystalline and polycrystalline blending method, the energy density of the battery can be further improved by using a polycrystalline material and making the particle diameter distribution meet the given bimodal distribution condition, which can further improve the energy density of the battery.

In some embodiments of the present application, the positive electrode active material may further include: a pre-lithiation additive. Compared with graphite, the silicon-containing material has more active sites, and consumes more Li when an SEI film is formed in the lithium battery, and the volume expansion of the silicon-containing material during the charge and discharge cycle is also large, which easily leads to the continuous rupture and regeneration of the SEI film due to the cycle expansion, thereby consuming more Li. The pre-lithiation additive is added to the positive electrode active material, to compensate for or alleviate the consumption of Li by the silicon-containing material, reduce an adverse effect of introduction of the silicon-containing material on initial Coulombic efficiency and cycle performance of the battery, and improve high-temperature storage performance of the battery. Therefore, while the energy density of the battery is improved, the battery has higher initial Coulombic efficiency, better cycle performance and high-temperature storage performance, and the service life of the battery is prolonged.

In some embodiments of the present application, the pre-lithiation additive may include LiₓM_{y}O_{z}, 1≤x≤5, 1≤y≤3, 1≤z≤8, and M includes one or more elements of Ni, Co, V, Cr, Mn, Fe, Mo, Cu, and Zn. Exemplarily, a value of x may be 1, 2, 3, 4 or 5, or the like, or may be a range composed of any of the above values, optionally, the value of x may be 1<x≤5, for example, 2≤x≤5; a value of y may be 1, 2 or 3, or may be a range composed of any of the above values; and a value of z may be 1, 2, 3, 4, 5, 6, 7 or 8, or the like, or may be a range composed of any of the above values, optionally, the value of z may be 1<z≤8, for example, 2≤z≤8. When the positive electrode active material is doped with LiₓM_{y}O_{z}, a good positive electrode lithium supplement effect can be achieved. It may be understood that, in a battery formation and use process, as a lithium-supplementing process proceeds, lithium in the pre-lithiation additive is partially or completely released, so that the pre-lithiation additive changes from an initial state to a partially delithiated state or a completely delithiated state, and in this case, x≤1 and/or z≤1 may occur.

In some embodiments of the present application, the pre-lithiation additive may include but is not limited to Li₂ NiO₂ and/or Li₅FeO₄. In the preparation process of the positive electrode sheet, Li₂NiO₂ and / or Li₅FeO₄ can be directly doped into the positive electrode active substance layer. Li₂NiO₂ can form LiNiO₂ with lithium intercalation and deintercalation capability after lithium removal, and LiNiO₂ may transform into Li₁₋ₓNiO₂ under a delithiated state, where 0≤x2≤1, and can be restored to LiNiO₂ in a lithiated state; and Li₅ FeO₄ has a strong lithium supplement ability, and LiFeO₂ formed after delithiation will not bring about obvious side reactions. Therefore, using Li₂NiO₂ and/or Li₅FeO₄ as the pre-lithiation additive can achieve a better capacity compensation effect.

In some embodiments of the present application, the pre-lithiation additive may include an initial stat e, a partially delithiated state and a completely delithiated state. When the pre-lithiation additive changes from the initial state to the partially delithiated state and the completely delithiated state, the pre-lithiation additive may include LiₙNiOₘ and/or LiₚFeO_{q}, where 0≤n≤2, 0<m≤2, 0<p≤5 and 0<q≤4. For example, a value of n may be 0, 0.5 1, 1.5 or 2, or may be a range composed of any of the above values; a value of m may be 0.5, 1, 1.5 or 2, or may be a range composed of any of the above values; a value of p may be 0.5, 1, 2, 3, 4 or 5, or may be a range composed of any of the above values; and a value of q may be 1, 2, 3 or 4, or may be a range composed of any of the above values. Exemplarily, using the pre-lithiation additive whose initial state is Li₂NiO₂ as an example, when lithium in Li₂NiO₂ is partially deintercalated, the composition of the pre-lithiation additive LiₙNiOₘ may include one or more of components 0<n<1, n=1, and 1<n<22. When Li in Li₂NiO₂ is completely deintercalated, the composition of the pre-lithiation additive LiₙNiOₘ may include NiOₘ. Taking the pre-lithiation additive whose initial state is Li₅FeO₄ as an example, when lithium in Li₅FeO₄ is partially deintercalated, the composition of the pre-lithiation additive LiₚFeO_{q} may include one or more of components 1<e<2, 2≤e<3, 3≤e<4 or 4≤e<5. When lithium in Li₅FeO₄ is completely deintercalated, the composition of the pre-lithiation additive LiₚFeO_{q} may include LiFeO₂, and due to factors such as polarization, LiFeO₂ may have a possibility of continuing delithiation, and a LiₚFeO_{q} component with p<1 occurs.

In some embodiments of the present application, when the pre-lithiation additive changes from the initial state to the completely delithiated state, the pre-lithiation additive may include NiOₘ and/or LiₚFeO_{q}, where 0<m≤2, 0<p≤1 and 0<q≤2, for example, a value of m may be 0.5, 1, 1.5 or 2, or the like, or may be a range composed of any one of the above values; a value of p may be 0.2, 0.5, 0.8 or 1, or may be a range composed of any of the above values; and a value of q may be 0.2, 0.5, 1, 1.5 or 2, or may be a range composed of any of the above values. Exemplarily, taking a pre-lithiation additive in an initial state of Li₂NiO₂ and Li₅FeO₄ as an example, when the pre-lithiation additive is completely delithiated, the delithiated pre-lithiation additive may include but is not limited to NiO and/or LiFeO₂.

In the embodiment of the present application, qualitative and quantitative analysis of the positive electrode active substance layer or the positive electrode active material may be performed by using one or more of conventional instruments and conventional methods including a scanning electron microscope, an EDS energy dispersive spectrometer, an X-ray diffractometer, and an inductively coupled plasma optical emission spectrometer. For example, in the positive electrode active substance layer, there is usually a size difference between the pre-lithiation additive and the nickel cobalt manganese metal oxide particles or the nickel cobalt aluminum metal oxide, and the pre-lithiation additive does not completely disappear after delithiation, but residual elements and a particle skeleton remain, and the pre-lithiation additive usually has a specific volume shrinkage after delithiation, so that a specific gap is formed between the residual particle skeleton and a surrounding area of the residual particle skeleton; on the basis of the above difference, potential positions of the pre-lithiation additive in the cross-section of the positive electrode active substance layer can be rapidly screened via scanning electron microscope testing, and the elemental composition and content of the pre-lithiation additive can be analyzed in combination with an energy dispersive spectrometer (EDS); in addition, XRD characterization may be further performed on the sample to be tested of the positive electrode active material with reference to an X-ray diffractometer, to determine a crystal structure of the pre-lithiation additive, and a content of the pre-lithiation additive is further determined with reference to ICP testing.

In some embodiments of the present application, on the basis of the total mass of the positive electrode active substance layer, the mass proportion of the positive electrode active material in the positive electrode active substance layer may be 97.5% to 98.5%, for example, 97.5%, 98%, or 98.5%, or the like. The content of the positive electrode active material can be tested by performing thermogravimetric analysis on the positive electrode active substance layer sample in a discharged state (for example, after being discharged to a lower cut-off voltage), for example, the sample to be tested can be heated at a heating rate of 5°C/min until the mass of the sample to be tested no longer changes significantly, where the heating temperature can range from 25°C to 600°C. The content of the positive electrode active material satisfies the given range, which is beneficial to further improving the energy density of the battery.

In some embodiments of the present application, on the basis of the total mass of the positive electrode active material, a mass proportion of the pre-lithiation additive may be 0.5% to 5%, for example, 0.5%, 1%, 1.5%, 2%, 2.5%, 3%, 3.5%, 4%, 4.5%, or 5% or the like. The content of the pre-lithiation additive in the positive electrode active material may be calculated on the basis of a total Li content of the positive electrode active material per unit area of the positive electrode sheet, a residual lithium content in the pre-lithiation additive, and a lithium content in the nickel cobalt manganese metal oxide or the nickel cobalt aluminum metal oxide by using a method such as an ICP test. Optionally, the content of the pre-lithiation additive in the positive electrode active material may be tested in a discharged state (for example, after being discharged to the lower cut-off voltage). Appropriately increasing the content of the pre-lithiation additive is beneficial to elevating the initial Coulombic efficiency of the battery and improving the cycle performance thereof. The content of the pre-lithiation additive is controlled to satisfy the given condition, so that a risk of a significant decrease in the energy density of the battery that may be caused by a relatively large addition amount of the pre-lithiation additive can be reduced on a basis of improving the initial Coulombic efficiency of the battery, and the battery can have both a relatively high initial Coulombic efficiency and energy density, relatively good cycle performance, and a relatively long service life. Further, on the basis of the total mass of the positive electrode active material, a mass proportion of the pre-lithiation additive may be 1% to 3%, so that the battery can further have both relatively high initial Coulombic efficiency and energy density and relatively good cycle performance.

In some embodiments of the present application, the positive electrode active material may include a nickel cobalt manganese metal oxide, and the nickel cobalt manganese metal oxide may include one or more elements of Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F. Exemplarily, taking a lithium battery as an example, the nickel cobalt manganese metal oxide may include Liₓ₁NiₐCo_{b}Mn_{c}M1_{d}O₂, where 0.8≤x1≤1.2, 0.8≤a≤0.96, 0.04≤b≤0.12, 0.03≤c≤0.07, and 0≤d≤0.13, optionally, a+b+c+d=1, and M1 may be one or more elements of Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F. Other elements (for example, the M1 element) in the nickel cobalt manganese metal oxide may be qualitatively analyzed and quantitatively analyzed by using a method such as an inductively coupled plasma emission spectroscopy (ICP) test or an EDS energy spectrum analysis, and may be specifically performed in a discharging state. Taking ICP testing as an example, the battery cell may be fully discharged (e.g., discharged to the lower cut-off voltage), disassembled to obtain a test sample of positive electrode active material, and then subjected to relevant tests. The electrochemical performance of the nickel cobalt manganese ternary active material can be further improved and the service life of the battery can be prolonged by doping the nickel cobalt manganese ternary active material with the element.

In some embodiments of the present application, the positive electrode active material may include a nickel cobalt manganese metal oxide, and the nickel cobalt manganese metal oxide may include one or more elements of Al, Zr, B, P, and Ti. Doping the nickel cobalt manganese metal oxide with an element such as Zr or B helps to further stabilize the structure of the high-nickel ternary active material and improve the cycle stability. Therefore, the battery cell can have both a high energy density and better cycle stability, and the service life of the battery is prolonged.

In some embodiments of the present application, the nickel cobalt manganese metal oxide may include an Al element, and on the basis of the total mass of the positive electrode active material, the mass proportion of the Al element may be 0.01% to 0.1%, such as 0.01%, 0.02%, 0.05%, 0.08% or 0.1%, or the like.

In some embodiments of the present application, the nickel cobalt manganese metal oxide may include a Zr element, and on the basis of the total mass of the positive electrode active material, the mass proportion of the Zr element may be 0.1% to 0.5%, such as 0.1%, 0.2%, 0.3%, 0.4% or 0.5% or the like.

In some embodiments of the present application, the nickel cobalt manganese metal oxide may include an element B, and on the basis of the total mass of the positive electrode active material, the mass proportion of element B may be 0.01% to 0.15%, such as 0.01%, 0.02%, 0.05%, 0.08%, 0.1%, 0.12% or 0.15% or the like.

In some embodiments of the present application, the nickel cobalt manganese metal oxide may include a P element, and on the basis of the total mass of the positive electrode active material, the mass proportion of the P element may be 0.05% to 0.2%, such as 0.05%, 0.08%, 0.1%, 0.12%, 0.15%, 0.18%, or 0.2% or the like.

In the present application, controlling the content of the element in the nickel cobalt manganese metal oxide to satisfy the given range is not only beneficial to further improving the electrochemical performance of the nickel cobalt manganese ternary active material, but also can reduce the risk of adverse effects on the battery performance due to the introduction of a large amount of doping elements.

In some embodiments of the present application, a single-side coating areal density of the positive electrode active substance layer is 20 mg/m² to 30 mg/m², for example, may be 20 mg/m², 22.5 mg/m², 25 mg/m², 27.5 mg/m² or 30 mg/m², or the like. Appropriately increasing the areal density of the positive electrode active substance layer is beneficial to further improving the energy density of the battery, so that the areal density of the positive electrode active substance layer satisfies the given range, which can reduce the risk of the decrease in the dynamic performance of the battery due to the higher coating areal density of the electrode sheet on the basis of making the battery have a higher energy density, and then making the battery have both a higher energy density and a better dynamic performance.

In some embodiments of the present application, a compacted density of the positive electrode active substance layer may be 3.3 g/cm³ to 3.6 g/cm³, for example, 3.3 g/cm³, 3.35 g/cm³, 3.4 g/cm³, 3.45 g/cm³, 3.5 g/cm³, 3.55 g/cm³, or 3.6 g/cm³ or the like. Appropriately increasing the compacted density of the positive electrode active substance layer is beneficial to further improving the energy density of the battery, so that the compacted density of the positive electrode active substance layer satisfies the given range, which can reduce the risk of the decrease in the dynamic performance of the battery due to the high compacted density of the electrode sheet on the basis of making the battery have a high energy density, and then making the battery have both a high energy density and a good dynamic performance.

In the present application, the single-side coating areal density of the positive electrode active substance layer and the compacted density of the positive electrode active substance layer may be obtained by discharging the battery cell to 0% SOC with reference to the following method: The positive electrode sheet is dissembled from the battery cell. For example, the positive electrode sheet coated on a single side (if the electrode sheet is coated on both sides, the positive electrode active substance layer on one side may be wiped off first) is punched into a small round piece with an area of S1, and the weight of the small round piece is weighed and denoted as M1, and a thickness H1 thereof is measured. Then, the positive electrode active substance layer of the above-mentioned weighed positive electrode sheet is wiped off, and the weight of the positive electrode current collector is measured and denoted as M0, and a thickness H0 thereof is measured. The single-side coating areal density of the positive electrode active substance layer=(the weight M1 of the positive electrode sheet-the weight M0 of the positive electrode current collector)/S1, the thickness of the positive electrode active substance layer=the thickness H1 of the positive electrode sheet-the thickness H0 of the positive electrode current collector, and the compacted density of the positive electrode active substance layer=the single-side coating areal density of the positive electrode active substance layer/the thickness of the positive electrode active substance layer.

It should be noted that, in the present application, discharging the battery cell to 0% SOC refers to the corresponding state of charge of the battery cell when the battery cell is charged at a constant current of 1/3C to 4.25V, then charged at a constant voltage of 4.25V to a current of 0.05C, and left for 5 min, and then discharged at 1/3C to 2.5V.

In some embodiments of the present application, the thickness of the positive electrode current collector may be 13 µm to 19 µm, for example, 13 µm, 14 µm, 15 µm, 16 µm, 17 µm, 18 µm, or 19 µm or the like. Appropriately increasing the thickness of the positive electrode current collector can reduce the risk of damage to the positive electrode current collector under a high compacted density, and the risk of breakage of the positive electrode sheet due to expansion or stress pulling during the charge and discharge cycle. Enabling the thickness of the current collector to satisfy the given range cannot only reduce the risk of breakage of the current collector during the preparation of the electrode sheet and the risk of breakage of the electrode sheet during the use of the battery, improve the cycle performance of the battery, but also take into account the energy density of the battery and reduce the adverse effect on the energy density of the battery due to the increase in the thickness of the current collector, so that the battery has a higher energy density, better cycle stability and a longer service life. Further, the thickness of the positive electrode current collector may be is 15 µm to 17 µm.

In some embodiments of the present application, the positive electrode current collector may be a conventional metal foil or a composite current collector (a composite current collector may be formed by disposing a metal material on a polymer base material). As an example, the positive electrode current collector may include at least one of a copper foil, an aluminum foil, a nickel foil, a stainless steel foil, a stainless steel mesh, and a carbon-coated aluminum foil.

In some embodiments of the present application, the positive electrode active substance layer may further optionally include at least one of a binder, a conductive agent, and anther optional auxiliary agent. As an example, the binder, the conductive agent, and the auxiliary agent all can be conventional choices in the art. For example, the conductive agent may include, but is not limited to, one or more of superconductive carbon, acetylene black, carbon black, Ketjen black, a carbon dot, a carbon nanotube, graphene and a carbon nanofiber; and the binder may include, but is not limited to, styrene-butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethylcellulose (CMC), polyvinyl alcohol (PVA), and polyvinyl butyral (PVB). These materials are all commercially available.

### [Negative electrode sheet]

In some embodiments of the present application, on the basis of the total mass of the negative electrode active material, the mass proportion of the silicon element in the negative electrode active material may be 0.5% to 9.5%, for example, 0.5%, 1%, 2%, 3%, 4%, 5%, 6%, 7%, 8%, 9% or 9.5%, or the like. The proportion of the silicon-containing material in the negative electrode active material is controlled so that the mass proportion of the silicon element in the negative electrode active material satisfies the given range, which is beneficial to further balance the improvement effect of the silicon-containing material on the energy density of the battery and the adverse effects of more active sites and larger cycle expansion volume of the silicon-containing material on the first efficiency and cyclic capacity retention rate of the battery, and is further beneficial to further improve the energy density of the battery while taking into account the higher first efficiency and cycle stability. Optionally, on the basis of the total mass of the negative electrode active material, the mass proportion of the silicon element in the negative electrode active material may be 2% to 9.5%.

In some embodiments of the present application, the thickness of the negative electrode current collector may be 4% to 7% of the total thickness of the negative electrode sheet. Therefore, on the basis of reducing the risk of damage or breakage of the negative electrode sheet due to repeated expansion during the long-term cycle of the battery, the adverse effect on the energy density of the battery due to the increase in the thickness of the negative electrode current collector can be further reduced, so that the battery has higher energy density, better cycle stability and longer service life.

In some embodiments of the present application, the graphite may include natural graphite. Compared with artificial graphite, natural graphite has a higher specific capacity, and the use of natural graphite in combination with the silicon-containing material is beneficial to further improving the energy density of the battery.

In some embodiments of the present application, the silicon-containing material may include a silicon oxide material and/or a silicon-carbon material. Therefore, it is beneficial to further increasing the energy density of the battery cell. The type of the silicon-containing material may be qualitatively analyzed in combination with one or more of conventional characterization methods such as X-ray diffraction analysis (XRD) and EDS energy spectrum analysis.

In some embodiments of the present application, on the basis of the total mass of the negative electrode active material, the mass proportion of the silicon element in the negative electrode active material may be 2% to 6%, for example, 2%, 2.5%, 3%, 3.5%, 4%, 4.5%, 5%, 5.5%, or 6% or the like. The proportion of the silicon-containing material in the negative electrode active material is controlled so that the mass proportion of the silicon element in the negative electrode active material satisfies the given range, which is beneficial to further balancing the improvement effect of the silicon-containing material on the energy density of the battery and the adverse effect of more active sites and larger cycle expansion volume of the silicon-containing material on the initial Coulombic efficiency and cyclic capacity retention rate of the battery, and further beneficial to taking into account higher initial Coulombic efficiency and cycle stability on the basis of further improving the energy density of the battery. Further, on the basis of the total mass of the negative electrode active material, the mass proportion of the silicon element in the negative electrode active material may be 3% to 5%.

In some embodiments of the present application, the silicon-containing material may further include a metal element, and the metal element may include one or more elements of Na, Li, Ti, Fe, and Co. Whether there is a metal element in the silicon-containing material may be analyzed in a discharged state (for example, discharged to a lower cut-off voltage or discharged to 0% SOC) in combination with one or more of conventional characterization methods such as EDS energy spectrum analysis and ICP testing, for example, the battery cell may be disassembled after discharging to 0% SOC, the electrode sheet is soaked with DMC, then the electrode sheet is quenched using plasma, a cross section is taken and observed under a scanning electron microscope, and the type of the metal element in the silicon-containing material is tested using an EDS energy spectrometer. Doping the silicon-containing material with Na or Li may occupy the active sites of the silicon-containing material, reduce the consumption of Li during the formation of the SEI film, and further improve the energy density of the battery and prolong the cycle life of the battery. Doping the silicon-containing material with Ti, Fe, or Co may increase the carrier concentration and improve the conductivity of the silicon-containing material, thereby further improving the energy density and electrochemical performance of the battery.

In some embodiments of the present application, the silicon-containing material includes a metal element, and the mass of the metal element may be 0.1% to 0.6% of the mass of the silicon element, for example, 0.1%, 0.2%, 0.3%, 0.4%, 0.5% or 0.6% or the like of the mass of the silicon element. The content of the metal element in the negative electrode active material may be analyzed in combination with one or more of conventional characterization methods such as ICP testing and EDS energy spectrum analysis in a discharged state (such as discharged to a lower cut-off voltage or discharged to 0% SOC), so as to obtain the relative content of the metal element and the silicon element in the negative electrode active material, for example, the battery cell may be disassembled to obtain the negative electrode sheet after being discharged to 0% SOC, 2g of powder is scraped after soaking the electrode sheet with DMC, and the content of the metal is tested by using ICP. Enabling the content of the metal element to satisfy the given range is beneficial to further improving the energy density and/or electrochemical performance of the battery.

In some embodiments of the present application, at least a part of a surface of the silicon-containing material may include a carbon coating layer. Therefore, not only the structural stability of the silicon-containing material during the charge and discharge cycle may be improved, and the risk of pulverization due to volume expansion may be reduced, but also the conductivity of the silicon-containing material may be improved, thereby further improving the electrochemical performance of the battery.

In some embodiments of the present application, a single-side coating areal density of the negative electrode active substance layer is 10 mg/cm² to 18 mg/cm², for example, 10 mg/cm², 12 mg/cm², 14 mg/cm², 16 mg/cm² or 18 mg/cm². Appropriately increasing the areal density of the negative electrode active substance layer is beneficial to further improving the energy density of the battery, so that the areal density of the negative electrode active substance layer satisfies the given range, which can reduce the risk of the decrease in the dynamic performance of the battery due to the higher coating areal density of the electrode sheet on the basis of making the battery have a higher energy density, and then making the battery have both a higher energy density and better dynamic performance. Further, the single-side coating areal density of the negative electrode active substance layer may be 13 mg/cm² to 15 mg/cm².

In some embodiments of the present application, a compacted density of the negative electrode active substance layer may be 1.3 g/m³ to 1.7 g/m³, for example, 1.3 g/m³, 1.4 g/m³, 1.5 g/m³, 1.6 g/m³ or 1.7 g/m³ or the like. Appropriately increasing the compacted density of the negative electrode active substance layer is beneficial to further improving the energy density of the battery, so that the compacted density of the negative electrode active substance layer satisfies the given range, which can reduce the risk of the decrease in the dynamic performance of the battery due to the higher compacted density of the electrode sheet on the basis of making the battery have a higher energy density, and then making the battery have both a higher energy density and better dynamic performance. Further, the compacted density of the negative electrode active substance layer may be 1.4 g/cm³ to 1.55 g/cm³.

In the present application, the single-side coating areal density of the negative electrode active substance layer and the compacted density of the negative electrode active substance layer may be determined with reference to the relevant test methods of the positive electrode sheet.

In some embodiments of the present application, the thickness of the negative electrode current collector is 6 µm to 13 µm, for example, 6 µm, 7 µm, 8 µm, 9 µm, 10 µm, 11 µm, 12 µm, or 13 µm or the like. Appropriately increasing the thickness of the negative electrode current collector can reduce the risk of damage to the negative electrode current collector under a high compacted density, and the risk of breakage of the negative electrode sheet due to expansion of the negative electrode sheet during the charge-discharge cycle. Enabling the thickness of the current collector to satisfy the given range cannot only reduce the risk of breakage of the current collector during the preparation of the electrode sheet and the risk of breakage of the electrode sheet during the use of the battery, improve the cycle performance of the battery, but also take into account the energy density of the battery and reduce the adverse effect on the energy density of the battery due to the increase in the thickness of the current collector, so that the battery has a higher energy density, better cycle stability and a longer service life. Further, the thickness of the negative electrode current collector may be 8 µm to 11 µm.

In some embodiments of the present application, the negative electrode current collector may be a conventional metal foil or a composite current collector (for example, a composite current collector may be formed by disposing a metal material on a polymer base material). As an example, the negative electrode current collector may be a metal foil such as a copper foil.

In some embodiments of the present application, the negative electrode active substance layer generally further includes a binder and a conductive agent, the conductive agent is configured to improve the conductivity of the negative electrode active substance layer, and the binder is configured to firmly bind the negative electrode active material and the binder to the negative electrode current collector. The types of the conductive agent and the binder for the negative electrode sheet are not specifically limited in the present application, and can be selected according to actual needs. As an example, the conductive agent may include, but is not limited to, at least one of superconducting carbon, acetylene black, carbon black, ketjen black, a carbon dot, a carbon nanotube, graphene, and a carbon nanofiber. As an example, the binder may include, but is not limited to, at least one of styrene-butadiene rubber (SBR), styrenic block copolymers (SBCs), water-based acrylic resin, and carboxymethyl cellulose (CMC). In addition, the negative electrode active substance layer may further optionally include a thickener, such as carboxymethyl cellulose (CMC). However, the present application is not limited thereto, and other materials that may serve as thickeners for negative electrode sheets of a lithium-ion battery may also be used in the present application.

### [Electrolyte solution]

In some embodiments of the present application, the battery cell may further include: an electrolyte solution, where the electrolyte solution may include an organic solvent, and the organic solvent may include a cyclic carbonate and a linear carbonate.

Exemplarily, taking a lithium battery as an example, the electrolyte solution may include an organic solvent and a lithium salt, and the organic solvent may include a cyclic carbonate and a linear carbonate. Therefore, it is further beneficial to obtaining a battery having a high energy density.

Exemplarily, the cyclic carbonate may include ethylene carbonate (EC) and/or propylene carbonate (PC), for example, EC. The linear carbonate may include one or more of ethyl methyl carbonate (EMC), dimethyl carbonate (DMC), and diethyl carbonate (DEC).

In some embodiments of the present application, on the basis of the total mass of the electrolyte solution, the mass proportion of the cyclic carbonate may be 15% to 25%, and the mass proportion of the linear carbonate may be 50% to 70%. For example, on the basis of the total mass of the electrolyte solution, the mass proportion of the cyclic carbonate may be 15%, 18%, 20%, 22% or 25%, or the like. The mass proportion of the linear carbonate may be 50%, 55%, 60%, 65% or 70%, or the like. Therefore, it is beneficial to improving the stability of the electrolyte solution.

In some embodiments of the present application, the electrolyte solution may further include: an additive, where the additive may include fluoroethylene carbonate (FEC) and/or vinylene carbonate (VC). The addition of FEC helps the positive electrode sheet to form a stable CEI film, and forms a tough SEI film on the surface of the negative electrode sheet, thereby reducing the consumption of more Li caused by the expansion of the silicon-containing material. The addition of VC is beneficial to forming a stable polycarbonate SEI film on the surface of the negative electrode sheet, thereby further improving the cycle performance of the battery.

In some embodiments of the present application, the electrolyte solution may also optionally include other additives that can improve certain performance of the battery, such as additives that improve the overcharge performance of the battery, additives that improve the high-temperature performance of the battery, additives that improve the low-temperature performance of the battery, and the like.

In some embodiments of the present application, the electrolyte solution further includes an electrolyte salt, and the electrolyte salt may include a lithium salt.

In some embodiments of the present application, the electrolyte solution may include an organic solvent, a lithium salt, and an additive, the organic solvent may include a cyclic carbonate and a linear carbonate, the cyclic carbonate may include EC, the linear carbonate may include one or more of EMC, DMC, and DEC, the additive may include FEC and VC, and the lithium salt may include LiPF₆.

It may be understood that the concentration of the lithium salt in the electrolyte solution and the mass percentage of the additive in the electrolyte solution may be flexibly selected according to actual needs, and are not particularly limited herein.

### [Separator]

Generally, the battery cell may further include a separator. The present application has no particular limitation on the material of the separator and any well-known porous structure separator with electrochemical stability and mechanical stability can be selected according to actual needs. The separator can include, but is not limited to, a single-layer or multi-layer film containing at least one of a glass fiber, a non-woven fabric, polyethylene, polypropylene, and polyvinylidene fluoride.

In some embodiments of the present application, the side of the separator facing the positive electrode sheet may be provided with a ceramic coating containing an inorganic oxide, for example, the inorganic oxide may include, but is not limited to, boehmite. Optionally, the ceramic coating may further include a binder, and the binder may include, but is not limited to, an acrylate-based binder. Providing the ceramic coating containing the inorganic oxide is beneficial to improving the oxidation resistance and high-temperature stability of the separator.

In some embodiments of the present application, the separator may be further provided with a first bonding coating, and the first bonding coating may be located between the separator and the ceramic coating.

In some embodiments of the present application, the side of the separator facing the negative electrode sheet may be provided with a second bonding coating layer.

The first bonding coating layer and the second bonding coating layer may each independently include, but are not limited to, polyvinylidene fluoride (PVDF) and/or polymethyl methacrylate (PMMA). Providing the first bonding coating and/or the second bonding coating is beneficial to saving the internal space of the battery and improving the volume energy density of the battery.

In some embodiments of the present application, the total thickness of the separator may be 7 µm to 14 µm, for example, 7 µm, 8 µm, 9 µm, 10 µm, 11 µm, 12 µm, 13 µm, or 14 µm or the like. Therefore, it is beneficial to further avoiding the risk of reducing the energy density of the battery due to the large thickness of the separator. Further, the total thickness T of the separator is 7 µm to 10 µm.

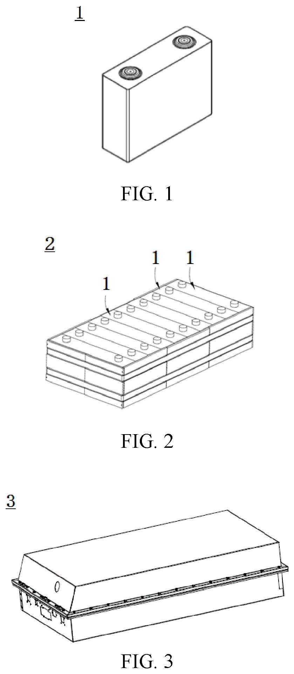

The shape of the battery cell is not particularly limited in the embodiments of the present application, for example, in some embodiments of the present application, the battery cell may be a pouch battery, a square battery or a cylindrical battery. FIG. 1 shows a battery cell 1 with a square structure as an example.

In some embodiments of the present application, the battery cell may be a cylindrical battery, the cylindrical battery may include a housing, and the housing may include an upper cover, a lower cover, and a side wall.

For example, a thickness of the side wall of the housing may be 0.2 mm to 0.4 mm, for example, may be 0.2 mm, 0.25 mm, 0.3 mm, 0.35 mm, or 0.4 mm, and optionally may be 0.25 mm to 0.3 mm. Therefore, the side wall of the housing can have a lower thickness and mass, which is beneficial to further improving the energy density of the battery.

Exemplarily, a thickness of a housing wall of the upper cover or the lower cover of the housing may be 0.25 mm to 0.45 mm, for example, may be 0.25 mm, 0.3 mm, 0.35 mm, 0.4 mm, or 0.45 mm, and optionally may be 0.27 mm to 0.33 mm. Therefore, the upper cover or the lower cover of the housing can have a relatively small thickness and mass, which is beneficial to further improving the energy density of the battery.

Exemplarily, in the cylindrical battery housing, the upper cover of the housing may be provided with a cap, the cap may include a pole, and a tab of the positive electrode sheet may be connected to the pole through a first current collecting portion; and a tab of the negative electrode sheet may be connected to the housing wall of the lower cover of the housing through a second current collecting portion. Optionally, the cap may be a steel cap. Providing the cap structure not only facilitates the welding connection of the cylindrical battery through the current collecting portion (for example, a current collecting bar), but also facilitates the pressure relief after the failure of the battery, and reduces the safety risk that may be caused by the large gas production of the high nickel and high silicon system battery due to thermal runaway.

In some embodiments, the battery cell may include an outer package. The outer package is configured to package a positive electrode sheet, a negative electrode sheet, and an electrolyte.

In some embodiments, the outer package may include a housing, and a cover plate. The housing may include a bottom plate and side plates connected to the bottom plate, and the bottom plate and the side plates may define an accommodating chamber. The housing has an opening communicating with the accommodating chamber, and the cover plate can cover the opening to close the accommodating chamber.

The positive electrode sheet, the negative electrode sheet, and the separator may be formed into an electrode assembly through a winding process or a lamination process. The electrode assembly is packaged within the accommodating chamber. The battery cell may have one or more electrode assemblies, and the number may be adjusted as needed.

In some implementations, the outer package of the battery cell may include a hard casing, for example, a hard plastic casing, an aluminum casing, or a steel casing.

The outer package of the battery cell may alternatively include a soft package, such as a pouch-type soft package. The material of the soft package may be a plastic, such as at least one of polypropylene (PP), polybutylene terephthalate (PBT), and polybutylene succinate (PBS).

A second aspect of the present application provides a battery device, including: the battery cell according to the first aspect of the present application. Optionally, the electric device may include at least one of a battery module, a battery pack, and an energy storage device.

In some implementations, the battery device may be a battery cell or a battery module or a battery pack assembled by the battery cell. The battery module or the battery pack may include a plurality of battery cells, and the specific number of the battery cells may be adjusted according to application and capacity of the battery module.

FIG. 2 shows a battery module 2 as an example. Referring to FIG. 2, in the battery module 2, a plurality of battery cells 1 may be arranged sequentially in the length direction of the battery module 2. Certainly, the battery cells may alternatively be arranged in any other manner. Further, the plurality of battery cells 1 may be fastened by using fasteners. The battery module 2 may further include a casing having an accommodating space in which the plurality of battery cells 1 are accommodated. In some embodiments, the above battery module may be further assembled into a battery pack. The number of battery modules contained in the battery pack may be adjusted according to the application and capacity of the battery pack.

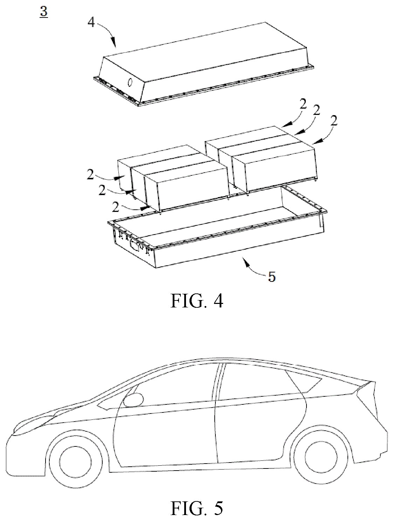

FIG. 3 and FIG. 4 show a battery pack 3 as an example. Referring to FIG. 3 and FIG. 4, a battery case and a plurality of battery modules 2 disposed in the battery case may be included in the battery pack 3. The battery case includes an upper case 4 and a lower case 5, the upper case 4 being capable of covering the lower case 5 and forming a closed space for accommodating the battery modules 2. The plurality of battery modules 2 may be arranged in any manner in the battery case.

A third aspect of the present application provides an electric device, including: The battery cell according to the first aspect of the present application or the battery device according to the second aspect of the present application, where the battery cell or the battery device is configured to provide electric energy.

Specifically, the battery cell or battery device may be used as a power source for the electric device, or as an energy storage unit for the electric device. The electric device may include, but is not limited to, a mobile device (e.g., a mobile phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

FIG. 5 shows an electric device as an example. The electric device is a pure electric vehicle, a hybrid electric vehicle, a plug-in hybrid electric vehicle, or the like. As another example, the electric device may be a mobile phone, a tablet computer, or a notebook computer. Generally, the electric device is compact, and may use a battery as a power source.

Examples of the present application are described below. The embodiments described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### (1) Positive electrode sheet

A positive electrode sheet includes a positive electrode current collector aluminum foil. Positive electrode active substance layers are arranged on two opposite surfaces of the aluminum foil. The positive electrode active substance layers respectively arranged on two opposite surfaces of the aluminum foil are equal in thickness. The thickness of the aluminum foil is 17 µm. The thickness ratio of the current collector in the positive electrode sheet is 10%. The single-side coating areal density of the positive electrode active substance layer is 25.6 mg/cm². On the basis of the mass of the positive electrode active substance layer, the positive electrode sheet includes a positive electrode active material with the mass proportion of 98% ((i.e., a ternary active material lithium nickel cobalt manganese oxide (metal oxide)), where the molar proportion of nickel, cobalt and manganese is 0.83:0.11:0.06, the particle size distribution diagram of the positive electrode active material represents a unimodal distribution, and the particle diameter corresponding to the peak value of the particle diameter distribution peak is 8.3 µm; a conductive agent with a mass proportion of 1.1% (conductive carbon black Super P); and a binder polyvinylidene fluoride (PVDF) with a mass proportion of 0.9%.

### (2) Negative electrode sheet

A negative electrode sheet includes a negative electrode current collector aluminum foil. Negative electrode active substance layers are arranged on two opposite surfaces of the copper foil. The negative electrode active substance layers respectively arranged on two opposite surfaces of the copper foil are equal in thickness. The thickness of the copper foil is 10 µm. The thickness ratio of the current collector in the negative electrode sheet is 5%. The single-side coating areal density of the negative electrode active substance layer is 14 mg/cm². The negative electrode active material includes natural graphite and a silicon-containing material SiO. On the basis of the mass of the negative electrode active substance layer, the negative electrode sheet includes a positive electrode active material with the mass proportion of 96% (on the basis of the total mass of the negative electrode active material, the mass proportion of the silicon element in the negative electrode active material is 2.3%); a conductive agent with a mass proportion of 0.8% (Super P); a binder styrene-butadiene rubber (SBR) with a mass proportion of 2%; and a thickener sodium carboxymethyl cellulose with the mass proportion of 1.2 (CMC-Na).

### (3) Electrolyte solution

The electrolyte solution includes an organic solvent and an electrolyte salt, where the organic solvent is prepared by EC, DMC, and EMC at a mass ratio of 28:36:34, the electrolyte salt is LiPF6₆, and a concentration of LiPF6₆ in the electrolyte solution is 1 mol/L.
(4) Separator: polyethylene.
(5) Battery cell: The battery cell includes the positive electrode sheet, the negative electrode sheet, the separator, and the electrolyte solution described above.

### Test method:

### (1) Test of elemental composition by inductively coupled plasma optical emission spectrometry

The instrument standard refers to EPA6010D-2014 *Inductively Coupled Plasma Optical Emission Spectrometry*. A sample was digested into a solution by a chemical method, atomized into plasma and excited to emit characteristic spectral lines of elements, and the content of the elements was qualitatively and quantitatively analyzed according to the wavelength and intensity (proportional to the concentration) of the spectral lines.

### (2) Test of particle diameter of positive electrode active material

Device model: Malvern 2000 (MasterSizer 2000) laser granulometer, reference standard procedure: GB/T19077-2016/ISO 13320:2009, specific test procedure: An appropriate amount of sample was taken (with a sample concentration sufficient to ensure 8 to 12% opacity), 20 ml of deionized water was added, while was ultrasonicated for 5 min (53 KHz/120 W) to ensure full dispersion of the sample, and then the sample was measured according to the GB/T19077-2016/ISO 13320:2009 standard.

### (3) Energy density test

At 25°C, the length, width and height of the battery cell were first measured with a steel ruler (the height of the pole was not counted), the volume V was recorded, the battery was charged to 4.25V at a constant current of 1/3C, then charged at a constant voltage of 4.25V until the current was 0.05C, allowed to stand for 5 min, and then discharged to 2.5V at 1/3C for 3 cycles, the discharge energy of the third cycle was recorded as W, and the volume energy density of the battery cell=W/V.

### (4) Cycling performance test

At 25°C, the battery cell after formation was allowed to stand for 30 min, and discharged to 2.8V at a constant current of 1/3C. Then, the charge-discharge cycle was performed according to the following steps: The battery cell was allowed to stand for 5 min, charged to 4.15V at a constant current of 1/2C, and then charged at a constant voltage until the current drops to 0.05C; the battery cell was allowed to stand for 5 min; and the battery cell was discharged to 2.8V at a constant current of 1/2C, and the discharge capacity at this time was recorded as C₀. After 500 cycles, the discharge capacity C₅₀₀ at the 500^{th} cycle was recorded. The cyclic capacity retention rate after 500 cycles was calculated according to the following formula:

Cyclic capacity retention rate after 500 cycles (%): C₅₀₀/C₀×100%.

### (5) Test for high-temperature storage performance

At 25°C, the battery was charged at a constant current of 1/3C to 4.25V, then charged at a constant voltage of 4.25V to a current of 0.05C, and then discharged at a constant current of 1/3C to 2.5V, to obtain the discharge capacity (C_{d1}) before storage; then, the battery was again charged to 4.15V at a constant current of 1/3C, and thereafter charged at a constant voltage of 4.15V until the current dropped to 0.05C; and then, the battery was placed in a 45°C incubator and stored for 150 days, and after being taken out, the battery was placed at 25°C and charged to 4.25V at a constant current of 1/3C, then charged at a constant voltage of 4.25V until the current dropped to 0.05C, and then discharged to 2.5V at a constant current of 1/3C to obtain the discharge capacity (C_{d2}) after storage. The high-temperature storage capacity retention rate (%) was calculated according to the following formula: C_{d2}/C_{d1}×100%.

### Example 2, Example 3, Example 3, Example 4, Example 5, Comparative Example 1, Comparative Example 2

The positive electrode sheet and the electrolyte solution in the battery cell were the same as those in Example 1, except that in the negative electrode sheet, the mass proportion of the silicon-containing material in the negative electrode active material was different, and the mass proportion of the silicon element in the negative electrode active material was also different, but the mass proportion of the negative electrode active material in the negative electrode active substance layer was the same as that in Example 1.

### Example 6

The positive electrode sheet and the electrolyte solution in the battery cell were the same as those in Example 1, except that in the negative electrode sheet, the type of the silicon-containing material was different, the silicon-containing material was SiC, and the mass proportion of the silicon element in the negative electrode active material was also different as the silicon-containing material changed, but the mass proportion of the silicon-containing material in the negative electrode active material was the same as that in Example 1.

### Example 7, Example 8, Example 9, Comparative Example 3, Comparative Example 4

The positive electrode sheet and the electrolyte solution in the battery cell were the same as those in Example 1, except that in the negative electrode sheet, the thickness of the negative electrode current collector was different, and the thickness proportion of the negative electrode current collector in the negative electrode sheet was also different.

Differences between Examples 1 to 9 and Comparative Examples 1 to 4 are shown in Table 1.

**Table 1**

| Item | Composition of negative electrode | Mass proportion of Si element in negative | Thickness of negative electrode current | Thickness proportion of negative electrode current collector | Energy density of battery cell | Cyclic capacity retention rate after | Capacity retention rate after storage at |
|---|---|---|---|---|---|---|---|
| | active material | electrode active material | collector (µm) | in negative electrode sheet | (Wh/L) | 500 cycles | 45°C for 150 d |
| Example 1 | Natural graphite, SiO | 2.3% | 10 | 5% | 726.9 | 78.5% | 81.6% |
| Comparative Example 1 | Natural graphite | 0.0% | 10 | 5% | 700.3 | 82.1% | 85.2% |
| Example 2 | Natural graphite, SiO | 0.6% | 10 | 5% | 710.5 | 80.4% | 83.7% |
| Example 3 | Natural graphite, SiO | 3.8% | 10 | 5% | 734.1 | 76.8% | 80.5% |
| Example 4 | Natural graphite, SiO | 6.4% | 10 | 5% | 751.6 | 71.6% | 79.1% |
| Example 5 | Natural graphite, SiO | 9.5% | 10 | 5% | 752.2 | 69.1% | 77.4% |
| Comparative Example 2 | Natural graphite, SiO | 12.7% | 10 | 5% | 730.7 | 67.6% | 75.4% |
| Example 6 | Natural graphite, SiC | 2.5% | 10 | 5% | 734.6 | 79.8% | 81.4% |
| Comparative Example 3 | Natural graphite, SiO | 2.3% | 20 | 10.0% | 709.9 | 79.1% | 82.0% |
| Example 7 | Natural graphite, SiO | 2.3% | 16.5 | 8.0% | 719.5 | 79.2% | 82.0% |
| Example 8 | Natural graphite, SiO | 2.3% | 14 | 7.0% | 721.3 | 79.0% | 81.9% |
| Example 9 | Natural graphite, SiO | 2.3% | 6 | 3.1% | 729.6 | 76.2% | 80.1% |
| Comparative Example 4 | Natural graphite, SiO | 2.3% | 5 | 2.6% | 735.5 | 72.3% | 77.9% |

With reference to Examples 1 to 9 and Comparative Examples 1 and 2, it can be known that the battery cell provided by the present application have both a relatively high energy density and cyclic capacity retention rate, indicating that in the present application, the high-nickel positive electrode active material is used in the positive electrode sheet, the graphite and the silicon-containing material are used together in the negative electrode sheet, and the doping amount of the silicon-containing material in the negative electrode sheet and the thickness proportion of the current collector in the negative electrode sheet are controlled to fall within an appropriate range, so that the single battery can have both a relatively high energy density and a relatively long cycle life.

Combining Examples 1 to 5, Comparative Examples 1 and 2, it can be seen that as the content of silicon element in the negative electrode sheet increases, the volume energy density of the battery cell tends to increase first and then decrease, while the cyclic capacity retention rate and high-temperature storage performance of the battery cell tend to decrease, and the analysis reason may be affected by the cracking or damage of the active material layer of the negative electrode sheet caused by the excessive content of the silicon-containing material. It indicates that controlling the amount of the silicon-containing material in the negative electrode active material within an appropriate range can better balance the energy density and the cycle performance of the battery cell, thereby being beneficial to obtaining a longer service life.

With reference to Example 1, Examples 7 to 9, and Comparative Examples 3 and 4, it can be seen that as the thickness ratio of the current collector in the negative electrode sheet increases, the cyclic capacity retention rate and the high-temperature storage performance of the battery cell increase first and then tend to be stable, while the volume energy density of the battery cell decreases. It indicates that appropriately increasing the thickness proportion of the current collector in the negative electrode sheet cannot only improve the cyclic capacity retention rate of the battery cell, but also take into account the volume energy density of the battery cell, so that the battery cell has both higher energy density and better cycle performance, which is beneficial to obtaining a longer service life.

It can be seen from Example 1 and Example 6 that the energy density of the battery cell can also be improved by using the silicon-carbon material instead of the silicon oxide material in combination with graphite.

### Example 10, Example 11, Example 12, Example 13, Example 14

The negative electrode sheet and the electrolyte solution in the battery cell are the same as those in Example 1, except that in the positive electrode sheet, the thickness of the positive electrode current collector is different, and the proportion of the thickness of the positive electrode current collector in the positive electrode sheet is also different.

Differences between Examples 10 to 14 and Example 1 are shown in Table 2.

**Table 2**

| Item | Thickness of positive electrode current collector/µm | Thickness proportion of positive electrode current collector in positive electrode sheet | Energy density of battery cell (Wh/L) | Cyclic capacity retention rate after 500 cycles | Capacity retention rate after storage at 45°C for 150 d |
|---|---|---|---|---|---|
| Example 1 | 17 | 10% | 726.9 | 78.5% | 81.6% |
| Example 10 | 13 | 7.6% | 730 | 75.40% | 80.10% |
| Example 11 | 14 | 8.2% | 729.1 | 76.70% | 80.90% |
| Example 12 | 20 | 11.8% | 722.5 | 79.10% | 81.90% |
| Example 13 | 23 | 13.5% | 719.4 | 79.60% | 82.20% |
| Example 14 | 26 | 15.3% | 716.7 | 79.70% | 82.30% |

With reference to Example 1 and Examples 10 to 14, it can be seen that as the thickness proportion of the current collector in the positive electrode sheet increases, the cyclic capacity retention rate and the high-temperature storage performance of the battery cell increase first and then tend to be stable, while the volume energy density of the battery cell tends to decrease. It indicates that appropriately increasing the thickness proportion of the positive electrode current collector can further improve the cyclic capacity retention rate of the battery cell, and take into account the volume energy density of the battery cell, so that the battery cell has both a relatively high energy density and better cycle performance, which is beneficial to obtaining a longer service life.

### Example 15

The negative electrode sheet and the electrolyte solution in the battery cell are the same as those in Example 1, except that in the positive electrode sheet, the type of the ternary active material is different, and in Example 15, the ternary active material is a lithium nickel cobalt aluminum oxide (metal oxide), and the molar proportion of nickel cobalt to aluminum in the lithium nickel cobalt aluminum oxide is 0.91:0.05:0.04.

### Comparative Example 5

The electrolyte solution in the battery cell is the same as that in Example 15, except that in the positive electrode sheet, the thickness of the positive electrode current collector is different, and the proportion of the thickness of the positive electrode current collector in the positive electrode sheet is also different; and in the negative electrode sheet, the thickness of the negative electrode current collector is different, and the proportion of the thickness of the negative electrode current collector in the negative electrode sheet is also different.

### Comparative Example 6, Comparative Example 7

The positive electrode sheet and the electrolyte solution in the battery cell are the same as those in Example 10, except that in the negative electrode sheet, the mass proportion of the silicon-containing material in the negative electrode active material is different, and the mass proportion of the silicon element in the negative electrode active material is also different, but the mass proportion of the negative electrode active material in the negative electrode active substance layer is the same as that in Example 15.

Differences among Example 15, Comparative Example 5, Comparative Example 6 and Comparative Example 7 are shown in Table 3.

**Table 3**

| Item | Thickness of positive electrode current collector/µm | Thickness proportion of positive electrode current collector in positive electrode sheet | Composition of negative electrode active material | Mass proportion of Si element in negative electrode active material | Thickness of negative electrode current collector (µm) | Thickness proportion of negative electrode current collector in negative electrode sheet | Energy density of battery cell (Wh/L) | Cyclic capacity retention rate after 500 cycles | Capacity retention rate after storage at 45°C for 150 d |
|---|---|---|---|---|---|---|---|---|---|
| Example 15 | 17.0 | 10.0% | Natural graphite, SiO | 2.3% | 10.0 | 5.0% | 742.4 | 73.6% | 75.7% |
| Comparative Example 5 | 8.0 | 5.0% | Natural graphite, SiO | 2.3% | 5.0 | 2.6% | 745.5 | 71.5% | 73.8% |
| Comparative Example 6 | 17.0 | 10.0% | Natural graphite, SiO | 12.7% | 10.0 | 5.0% | 742.9 | 67.6% | 69.5% |
| Comparative Example 7 | 17.0 | 10.0% | Natural graphite | 0.0% | 10.0 | 5.0% | 721.6 | 74.1% | 76.6% |

### Example 16, Example 17, Example 18, Example 19

The negative electrode sheet and the electrolyte solution in the battery cell are the same as those in Example 1, except that in the positive electrode sheet, the positive electrode active material is further added with a pre-lithiation additive, that is, the positive electrode active material includes a ternary active material and a pre-lithiation additive, but the mass proportion of the positive electrode active material in the positive electrode active substance layer is the same as that in Example 1.

### Comparative Example 8

The electrolyte solution in the battery cell is the same as that in Example 1, except that in the positive electrode sheet, the positive electrode active material is further added with a pre-lithiation additive, that is, the positive electrode active material includes a ternary active material and a pre-lithiation additive, but the mass proportion of the positive electrode active material in the positive electrode active substance layer is the same as that in Example 1. In the negative electrode sheet, the negative electrode active material only includes natural graphite and does not include a silicon-containing material, and the mass proportion of the silicon element in the negative electrode active material is also different, but the mass proportion of the negative electrode active material in the negative electrode active substance layer is the same as that in Example 1.

Differences among Example 16, Example 17, Example 18, Example 19, Comparative Example 8 and Example 1 are shown in Table 4.

**Table 4**

| Item | Types of Pre-lithiation additives | Mass proportion of pre-lithiation additive in positive electrode active material | Mass proportion of Si element in negative electrode active material | Energy density of battery cell (Wh/L) | Cyclic capacity retention rate after 500 cycles | Capacity retention rate after storage at 45°C for 150 d |
|---|---|---|---|---|---|---|
| Example 1 | None | 0% | 3.6% | 726.9 | 78.5% | 81.6% |
| Example 16 | Li₂NiO₂ | 2% | 3.6% | 728.7 | 83.7% | 86.1% |
| Example 17 | Li₂NiO₂ | 4% | 3.6% | 725.6 | 86.4% | 87.9% |
| Comparative Example 8 | Li₂NiO₂ | 2% | 0% | 701.6 | 84.3% | 86.4% |
| Example 18 | Li₅FeO₄ | 1% | 3.6% | 728.9 | 83.5% | 86.0% |
| Example 19 | Li₅FeO₄ | 3% | 3.6% | 727.5 | 86.7% | 87.5% |

With reference to Example 1, Example 16 to Example 19, it can be seen that the cyclic capacity retention rate and the high-temperature storage capacity retention rate of the battery cell can be significantly improved by adding the pre-lithiation additive, and the cyclic capacity retention rate and the high-temperature storage capacity retention rate of the battery cell also increase as the amount of the pre-lithiation additive increases, but the energy density of the battery cell tends to increase first and then decrease. It indicates that appropriately increasing the amount of the pre-lithiation additive is beneficial to further making the battery cell have both a relatively high energy density, relatively good cycle performance, and relatively good high-temperature storage performance. In addition, it can be further illustrated on the basis of Example 16 in combination with Comparative Example 8 that the energy density and cycle performance of the battery cell can be balanced by adjusting the amount of the silicon-containing material in the negative electrode sheet.

### Example 20

The negative electrode sheet and the electrolyte solution in the battery cell are the same as those in Example 16, except that in the positive electrode sheet, the particle diameter distribution of the positive electrode active material is different, the particle size distribution diagram of the positive electrode active material in Example 20 represents a bimodal distribution, the peak value of the small particle diameter peak corresponds to a particle diameter of 1 µm, and the peak value of the large particle diameter peak corresponds to a particle diameter of 9 µm.

### Example 21

The positive electrode sheet and the electrolyte solution in the battery cell are the same as those in Example 16, except that in the negative electrode sheet, the surface of the silicon-containing material is coated with a carbon material.

Differences among Example 16, Example 20 and Examples 21 are shown in Table 5.

**Table 4**

| Item | Number of peaks in particle size distribution diagram of positive electrode active material | Particle diameter corresponding to peak value of particle size distribution peak of positive electrode active material | Presence or absence of carbon material on surface of silicon-containing material of negative electrode | Energy density of battery cell (Wh/L) | Cyclic capacity retention rate after 500 cycles | Capacity retention rate after storage at 45°C for 150 d |
|---|---|---|---|---|---|---|
| Example 16 | Unimodal | 8.3 µm | No | 728.7 | 83.7% | 86.1% |
| Example 20 | Bimodal | Particle diameter corresponding to small particle diameter peak: 1 µm; Particle diameter corresponding to large particle diameter peak: 9 µm | No | 731.5 | 83.9% | 86.8% |
| Example 21 | Unimodal | 8.3 µm | Yes | 730.6 | 84.1% | 86.7% |

It can be seen from Example 16 and Example 20 that the energy density of the battery cell whose particle diameter distribution diagram of the positive electrode active material is bimodal is improved, which indicates that in the positive electrode sheet, a manner of matching large and small particle diameters of the positive electrode active material helps further enable the battery cell to have both a relatively high energy density and relatively good cycle performance, thereby prolonging the service life of the battery cell.

It can be learned from Example 16 and Example 21 that coating the surface of the silicon-containing material in the negative electrode sheet with the carbon material is beneficial to further improving the energy density and the cycle performance of the battery cell, and the high-temperature storage performance of the battery cell is also improved.

### Example 22, Example 23, Example 24, Example 25, Example 26

The negative electrode sheet and the electrolyte solution in the battery cell are the same as those in Example 16, except that in the positive electrode sheet, the ternary active material lithium nickel cobalt manganese oxide has a doping element.

### Example 27, Example 28

The positive electrode sheet and the electrolyte solution in the battery cell are the same as those in Example 16, except that in the negative electrode sheet, the silicon oxide material is doped with a metal element.

Differences between Examples 22 to 28 and Comparative Example 16 are shown in Table 6.

**Table 6**

| Item | Type of doping element M1 in lithium nickel cobalt | Mass proportion of doping element M1 in positive electrode active | Type of metal element doped in silicon-containing material | Mass proportion of metal element doped in silicon-containing material in negative electrode active | Energy density of battery cell | Cyclic capacity retention rate after | Capacity retention rate after storage at 45°C for |
|---|---|---|---|---|---|---|---|
| | manganate | material | | material | (Wh/L) | 500 cycles | 150 d |
| Example 16 | None | 0.0% | None | 0.0% | 731.5 | 83.9% | 86.8% |
| Example 22 | Al | 0.04% | None | 0.0% | 731.5 | 84.0% | 87.1% |
| Example 23 | Zr | 0.26% | None | 0.0% | 732.1 | 84.6% | 86.9% |
| Example 24 | B | 0.07% | None | 0.0% | 734.9 | 85.1% | 86.8% |
| Example 25 | P | 0.1% | None | 0.0% | 731.6 | 84.1% | 86.8% |
| Example 26 | P | 0.2% | None | 0.0% | 731.5 | 84.3% | 87.2% |
| Example 27 | None | 0.0% | Fe | 0.3% | 735.1 | 84.9% | 87.2% |
| Example 28 | None | 0.0% | Co | 0.3% | 737.4 | 83.8% | 86.9% |

With reference to Example 16 and Examples 22 to 26, it can be seen that doping a small amount of another element such as Al, Zr, or B into the ternary active material lithium nickel cobalt manganese oxide is beneficial to further improving the cycle performance of the battery cell.

With reference to Example 16 and Examples 27 to 28, it can be seen from that doping the silicon-containing material with a small amount of a metal element such as Fe or Co is beneficial to further improving the energy density of the battery.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising a positive electrode sheet and a negative electrode sheet, wherein
the positive electrode sheet comprises a positive electrode current collector and a positive electrode active substance layer provided on at least one side of the positive electrode current collector, the positive electrode active substance layer comprises a positive electrode active material, the negative electrode sheet comprises a negative electrode current collector and a negative electrode active substance layer provided on at least one side of the negative electrode current collector, and the negative electrode active substance layer comprises a negative electrode active material, wherein
the positive electrode active material comprises a nickel cobalt manganese metal oxide, and on the basis of the total molar mass of nickel, cobalt and manganese elements in the nickel cobalt manganese metal oxide, the molar proportion of the nickel element in the nickel cobalt manganese metal oxide is 80% to 96%; or
the positive electrode active material comprises a nickel cobalt aluminum metal oxide, and on the basis of the total molar mass of nickel, cobalt and aluminum in the nickel cobalt aluminum metal oxide, the molar proportion of the nickel element in the nickel cobalt aluminum metal oxide is 80% to 96%; and
the negative electrode active material includes graphite and a silicon-containing material, on the basis of the total mass of the negative electrode active material, the mass proportion of a silicon element in the negative electrode active material is 0.1% to 10%, and the thickness of the negative electrode current collector is 3% to 8% of the total thickness of the negative electrode sheet.

2. The battery cell according to claim 1, wherein on the basis of the total mass of the negative electrode active material, the mass proportion of the silicon element in the negative electrode active material is 0.5% to 9.5%, optionally 2% to 9.5%.

3. The battery cell according to claim 1 or 2, wherein a thickness of the negative electrode current collector is 4% to 7% of a total thickness of the negative electrode sheet.

4. The battery cell according to any one of claims 1 to 3, wherein a thickness of the positive electrode current collector is 7.5% to 15% of a total thickness of the positive electrode sheet, optionally 10% to 13.5%.

5. The battery cell according to any one of claims 1 to 4, wherein the positive electrode active material comprises the nickel cobalt manganese metal oxide, and on the basis of the total molar mass of nickel, cobalt, and manganese in the nickel cobalt manganese metal oxide, a molar proportion of the nickel element in the nickel cobalt manganese metal oxide is 83% to 91%; or
the positive electrode active material comprises the nickel cobalt aluminum metal oxide, and on the basis of the total molar mass of nickel, cobalt, and aluminum in the nickel cobalt aluminum metal oxide, a molar proportion of the nickel element in the nickel cobalt aluminum metal oxide is 83% to 91%.

6. The battery cell according to any one of claims 1 to 5, wherein the silicon-containing material comprises a silicon oxide material and/or a silicon-carbon material.

7. The battery cell according to any one of claims 1 to 6, wherein on the basis of the total mass of the negative electrode active material, the mass proportion of the silicon element in the negative electrode active material is 2% to 6%, optionally 3% to 5%.

8. The battery cell according to any one of claims 1 to 7, wherein the silicon-containing material further comprises a metal element, and the metal element comprises one or more elements of Na, Li, Ti, Fe, and Co.

9. The battery cell according to claim 8, wherein a mass of the metal element is 0.1% to 0.6% of a mass of the silicon element.

10. The battery cell according to any one of claims 1 to 9, wherein at least a part of a surface of the silicon-containing material comprises a carbon coating layer.

11. The battery cell according to any one of claims 1 to 10, wherein the graphite comprises natural graphite.

12. The battery cell according to claims 1 or 11, wherein the positive electrode active material comprises a polycrystalline material.

13. The battery cell according to any one of claims 1 to 12, wherein a particle size distribution diagram of the positive electrode active material represents a bimodal distribution, particle diameters corresponding to peak values of two peaks are respectively D₁ and D₂, 0.5 µm≤D₁≤1.5 µm, and 7 µm≤D₂≤12 µm.

14. The battery cell according to any one of claims 1 to 13, wherein the positive electrode active material further comprises a pre-lithiation additive.

15. The battery cell according to claim 14, wherein the pre-lithiation additive comprises LiₓM_{y}O_{z}, 1≤x≤5, 1≤y≤3, 1≤z≤8, and M comprises one or more elements of Ni, Co, V, Cr, Mn, Fe, Mo, Cu, and Zn.

16. The battery cell according to claim 14 or 15, wherein the pre-lithiation additive comprises Li₂NiO₂ and/or Li₅FeO₄.

17. The battery cell according to claim 14 or 15, wherein the pre-lithiation additive comprises LiₙNiOₘ and/or LiₚFeO_{q}, wherein 0≤n≤2, 0<m≤2, 0<p≤5, and 0<q≤4.

18. The battery cell according to claim 14 or 15, wherein the pre-lithiation additive comprises NiOₘ and/or LiₚFeO_{q}, wherein 0<m≤2, 0<p≤1, and 0<q≤2.

19. The battery cell according to any one of claims 14 to 18, wherein on the basis of the total mass of the positive electrode active material, a mass proportion of the pre-lithiation additive is 0.5% to 5%, optionally 1% to 3%.

20. The battery cell according to any one of claims 1 to 19, wherein the positive electrode active material comprises the nickel cobalt manganese metal oxide, and the nickel cobalt manganese metal oxide comprises one or more elements of Na, K, Mg, B, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce, and F, and optionally comprises one or more elements of Al, Zr, B, P, and Ti.

21. The battery cell according to claim 20, wherein the nickel cobalt manganese metal oxide comprises an Al element, and on the basis of the total mass of the positive electrode active material, a mass proportion of the Al element is 0.01% to 0.1%.

22. The battery cell according to claim 20 or 21, wherein the nickel cobalt manganese metal oxide comprises a Zr element, and on the basis of a total mass of the positive electrode active material, a mass proportion of the Zr element is 0.1% to 0.5%.

23. The battery cell according to any one of claims 20 to 22, wherein the nickel cobalt manganese metal oxide comprises a B element, and on the basis of a total mass of the positive electrode active material, a mass proportion of the B element is 0.01% to 0.15%.

24. The battery cell according to any one of claims 20 to 23, wherein the nickel cobalt manganese metal oxide comprises a P element, and on the basis of a total mass of the positive electrode active material, a mass proportion of the P element is 0.05% to 0.2%.

25. The battery cell according to any one of claims 1 to 24, wherein a single-side coating areal density of the positive electrode active substance layer is 20 mg/cm² to 30 mg/cm².

26. The battery cell according to any one of claims 1 to 25, wherein a compacted density of the positive electrode active substance layer is 3.3 g/cm³ to 3.6 g/cm³.

27. The battery cell according to any one of claims 1 to 26, wherein a thickness of the positive electrode current collector is 13 µm to 19 µm, optionally 15 µm to 17 µm.

28. The battery cell according to any one of claims 1 to 27, wherein a single-side coating areal density of the negative electrode active substance layer is 10 mg/cm² to 18 mg/cm², optionally 13 mg/cm² to 15 mg/cm^{2.}

29. The battery cell according to any one of claims 1 to 28, wherein a compacted density of the negative electrode active substance layer is 1.3 g/cm³ to 1.7 g/cm³, optionally 1.4 g/cm³ to 1.55 g/cm³.

30. The battery cell according to any one of claims 1 to 29, wherein a thickness of the negative electrode current collector is 6 µm to 13 µm, optionally 8 µm to 11 µm.

31. The battery cell according to any one of claims 1 to 30, further comprising: an electrolyte solution, wherein the electrolyte solution comprises an organic solvent, and the organic solvent comprises a cyclic carbonate and a linear carbonate.

32. The battery cell according to claim 31, wherein the cyclic carbonate comprises EC and/or PC, and the linear carbonate comprises one or more of EMC, DMC, and DEC.

33. The battery cell according to claim 31 or 32, wherein on the basis of a total mass of the electrolyte solution, a mass proportion of the cyclic carbonate is 15% to 25%, and a mass proportion of the linear carbonate is 50% to 70%.

34. The battery cell according to any one of claims 31 to 33, wherein the electrolyte solution further comprises: an additive, comprising FEC and/or VC.

35. The battery cell according to any one of claims 1 to 34, further comprising: a separator, wherein a ceramic coating layer containing an inorganic oxide is provided on a side of the separator facing the positive electrode sheet.

36. The battery cell according to claim 35, wherein the separator is further provided with a first bonding coating, and the first bonding coating is located between the separator and the ceramic coating.

37. The battery cell according to claim 35 or 36, wherein a second bonding coating layer is provided on a side of the separator facing the negative electrode sheet.

38. The battery cell according to any one of claims 35 to 37, wherein a total thickness of the separator is 7 µm to 14 µm, optionally 7 µm to 10 µm.

39. The battery cell according to any one of claims 1 to 38, wherein the battery cell is a cylindrical battery, the cylindrical battery comprises a housing, the housing comprises an upper cover, a lower cover, and a side wall, and a thickness of the side wall is 0.2 mm to 0.4 mm, optionally 0.25 mm to 0.3 mm.

40. The battery cell according to claim 39, wherein a thickness of a shell wall of the upper cover or the lower cover is 0.25 mm to 0.45 mm, optionally 0.27 mm to 0.33 mm.

41. A battery device, comprising the battery cell according to any one of claims 1 to 40, wherein the battery device comprises at least one of a battery module, a battery pack, or an energy storage device.

42. An electric device, comprising the battery cell according to any one of claims 1 to 40 or the battery device according to claim 41, wherein the battery cell or the battery device is configured to supply electric energy.
